# EUROPEAN PATENT APPLICATION

(11) **EP 1 347 008 A2**
(43) Date of publication of application: **24.09.2003**
(21) Application number: 03007666.5
(22) Date of filing: 26.01.1995
(51) Int. Cl.: C08J 9/12, C08J 9/228

(54) **Expanded articles of biodegradable plastic material and a process for the preparation thereof**

(30) Priority: 09.02.1994 IT MI940228
(62) Divisional of application: 99121109.5
(71) Applicant: NOVAMONT S.p.A., 28100 Novara (IT)
(72) Inventor: Bastioli, Catia, 28100 Novara (IT); Bellotti, Vittorio, 28010 Fontaneto d'Agogna (Novara) (IT); Del Tredici, Gianfranco, 21018 Sesto Calende (Varese) (IT); Rallis, Angelos, 28100 Novara (IT)
(74) Representative: Rambelli, Paolo (IT)

(57) **Abstract**

Expanded articles of biodegradable plastic material are produced by agglomerating expanded particles with density from 0.1. to 0.003 g/gm³ and size from 0.5 to 10 mm of diameter, made of a material comprising:
- from 50 to 95% by weight of thermoplastic starch;
- from 0.5. to 45% by weight of at least one thermoplastic polymer;
- from 2 to 20% by weight of water;
subject to a heating treatment and/or a treatment with at least one coating agent in order to modify their surface so that they can steady interact when brought into intimate contact.

## Description

The present invention relates to foamed article made of a biodegradable plastic material and to the process for preparing them.

In the sector of foamed materials, used, in particular, for protective packages, the need is felt to a higher and higher extent, for replacing foamed polystyrene with materials which meet the more and more stringent biodegradability requirements.

For that purpose, the use of starch-based materials was proposed in the past.

European patent application EP-A-0 087 847 discloses a process for preparing starch-based foamed articles, by heating starch or starch containing materials, in an extrude press in the presence of 10-30 % of water, by weight, and of a foaming agent, followed by extrusion.

European patent application EP-A-0 375 831 discloses foamed articles constituted by high-amylose starch, which display good mechanical and closed-cell-structure characteristics. These foamed articles are prepared by extrusion in the presence of water, at temperature comprised within the range of from 150 too 250 °C, possibly followed by a thermo-forming treatment.

International patent application published with No. WO 91/02023 discloses foamed articles of biodegradable plastic material, prepared by extruding a starch containing composition and a synthetic polymer selected from ethylene, vinyl alcohol and ethylene-acrylic acid copolymers, in the presence of a polymeric acid and sodium hydrogen carbonate as the foaming agent.

However, by operating according to the methods known from the prior art, preparing foamed articles having complex shapes and high thicknesses, is a difficult task. Furthermore, the resulting foamed articles in general do not display a satisfactory stability.

The purpose of the present invention is of providing foamed articles of biodegradable plastic material which do not display the drawbacks affecting the prior art, and are endowed with good mechanical characteristics, in particular good resilience and compressibility.

Therefore, an object of the present invention is a foamed material made of a biodegradable plastic material, constituted by agglomerated foamed particles having a density comprised within the range of from 0.1 to 0.003 g/cm³ and a size comprised within the range of from 0.5 to 10 mm of diameter, which particles are constituted by a material comprising:
- from 50 to 95%, preferably from 60 to 95%, by weight, of thermoplastic starch,
- from 0.5 to 45%, preferably from 2 to 35%, by weight, of at least one thermoplastic polymer, and
- from 2 to 20%, preferably from 5 to 17%, by weight, of water.

The foamed particles which constitute the foamed articles of the present invention have a density preferably comprised within the range of from 0.06 to 0.005 g/cm³, and a size preferably comprised within the range of from 1 to 5 mm.

Said foamed particles have a closed-cell structure. They can have different shapes and, in particular, a substantially spherical shape.

The presence of one or more thermoplastics polymers in the composition of the above said foamed particles makes it possible the melt strength of the composition to be improved, with foamed articles being obtained which are endowed with good resilience and low moisture sensitivity.

The thermoplastic starch which can be used as a component for said foamed particles can be a native starch, preferably corn starch or potato starch, or high-amylose starch grades, preferably containing more than 30% amylose, and waxy starch grades.

Furthermore, physically and chemically modified starches can be used, such as ethoxylated starches, oxypropylated starches, acetate starches, butyrate starches, propionate starches with a substitution degree comprised within the range of from 0.1 to 2, cationic starches, oxidized starches, crosslinked starches, gelated starches, starch complexed with polymer capable of yielding "V"-type complexes, e.g., with ethylene-vinyl alcohol (EVOH), ethylene-acrylic acid (EAA), ethylene-maleic anhydride copolymers, ethylene-ethyl acrylate-maleic anhydride ter-polymers, grafted starches, degraded starches, destructured starches.

Native starch is normally used without submitting it to any preliminary dehydration, with its water content of approximately 9-16% by weight.

The thermoplastic polymer which can be used as components of foamed particles are selected from:
i. Polymer from natural origin, either modified or non-modified, in particular cellulose derivatives, as cellulose acetate, cellulose butyrate with a substitution degree comprised within the range of from 1 to 2.5, possibly plasticized, alkyl celluloses, hydroxy alkyl celluloses, carboxy alkyl cellulose, in particular methyl cellulose, and, furthermore, chitosan, pullulan or casein and caseinates;
ii. Biodegradable polymers of synthetic origin, or obtained by fermentation, in particular polyesters, as homo-and copolymers of aliphatic C₂-C₂₄ hydroxy acids, or the corresponding lactones or lactides thereof, and furthermore polyesters derived from difunctional acids and aliphatic diols, such as, e.g.:
   - poly(epsilon-caprolactone), or its graft or block copolymers, the reaction products of caprolactone oligomers or polymers with aromatic or aliphatic isocynates,
   - lactic acid of lactide polymers, glycolic acid or polyglicolide polymers, lactic acid and glycolic acid copolymers,
   - polyhydroxybutyrate or polyhydroxybutyrate-valerate,
   - polyalkylene succinates and, in particular, polyethylene- or polybutylene succinate, polyethylene- or polybutylene adipate, polyethylene-or polybutylene sebacate, polyethylene- or polybutylene azelate, polyethylene- or propybutylene brassilate and copolymers thereof, possibly copolymerized with aliphatic or aromatic isocynates, possibly with their molecular weight being increased by means of chain extenders;
iii. Polymers capable of forming "V" type complexes with amylose, or polymers containing hydrophilic groups intercalated with hydrophobic sequences, such as:
   - ethylene-vinyl alcohol copolymers containing up to 50% by weight, preferably 10-44% by weight, of ethylene units, oxidised ethylene-vinyl alcohol copolymers, or ethylene-vinyl alcohol copolymers terminated with fatty acids, or grafted with polycaprolactone, or modified with acrylic of methacryloc monomers and/or pyridinium,
   - ethylene-vinyl acetate copolymers, which may also be partially hydrolysed,
   - ethylene-acrylic esters copolymers,
   - ethylene-acrylic esters-maleic anhydride or ethylene-vinyl acetate-glycidyl methacrylate terpolymers,
   - ethylene copolymers with unsaturated acids, such as acrylic acid, methacrylic acid, crotonic acid, itaconic acid, maleic anhydride, and so forth, in particular ethylene-acrylic acid copolymers containing 5-50 %, by mol, and preferably 10-30%, by mol, of units derived from acrylic acid,
   - ethylene termopolymer with vinyl acetate, which may be either totally or partially hydrolysed, with acrylic or methacrylic or crotonic or itaconic acid,
   - aliphatic 6-6, 6-9 or 12 polyamides, aliphatic polyurethanes, random or block polyuretane-polyamide, polyurethane-polyester, polyurethane-polyether, polyamide-polyester, polyamide-polyether, polyester-polyether copolymers;
iv. Polymers capable of forming hydrogen bonds with starch, in particular poly(vinyl alcohol) in various hydrolysis degrees, possibly modified with acrylates or methacrylates, poly(vinyl alcohol) previously plasticized or modified in order to reduce the melting point thereof, possibly containing gelling agents, as boric acid, borates or phosphates, vinyl acetate copolymers (in various hydrolysis degrees) with vinylpyrrolidone or styrene, polyethyloxazolines, polyvinylpyridine.

Preferred thermoplastic polymers are poly (vinyl alcohol), the copolymers of an olefinic monomer, preferably ethylene, with a monomer selected from vinyl alcohol, vinyl acetate, acrylic acid and methacrylic acid, aliphatic polyesters, such as polycaprolactone, poly(butylene succinate) and their copolymers, and aliphatic polyamides.

The foamed particles which constitute the foamed articles of the present invention preferably contain a nucleation agent.

The amount of such a nucleation agent in the foamed material is comprised within the range of from 0.005 to 5% by weight, preferably of from 0.05 to 3% by weight, still more preferably of from 0.2 to 2% by weight.

Useable nucleation agents are, e.g., inorganic compounds, as talc (magnesium silicate), calcium carbonate, and so forth, possibly previously as silanes, titanates, and so forth. Furthermore, organic fillers can be used, as yeast shells from sugar beet processing, dried, ground and powdered sugar beet flesh, wood powder, cellulose powder, and so forth.

The nucleation agent can be added to the mixture used to prepare the foamed particles, or, alternatively, it can be added to the foamed particles as a masterbatch. In the latter case the masterbatch can contain from 10 to 50% of one or more fillers.

The foamed particles can furthermore contain one or more slip agent (s) and/or dispersants having a hydrophile/lipophile balance index ("HLE") comprised within the range of from 3 to 25, preferably comprised within the range of from 6 to 20. When used, these agents van be present in amounts comprised within the range of from 0.01 to 5% by weight, preferably of from 0.1 to 3% by weight.

The foamed particles can also contain one or more plasticizer(s). When used, said plasticizes can be present in amounts comprised within the range of from 0.5 to 20% by weight, preferably of from 0.5 to 5.0% by weight.

Useable plasticizes are, e.g., those as disclosed in published International Patent Application Publ. No. WO 92/14782, the content of which is incorporated to the present disclosure. Particularly suitable for use as plasticizes are glycerol, sorbitol, mannitol, erythritol, low molecular weight poly(vinyl alcohol), their oxyethylated and oxypropylated derivatives, and, furthermore, urea.

Furthermore, the foamed particles can contain one or more flame retardant(s), which can be added to the mixture used in order to prepare the foamed particles or, alternatively, can be added to the foamed particles as a masterbatch, in particular in combination with the nucleating agent.

When they are used, said flame retardants are present in amounts comprise within the range of from 0.1 to 20% by weight, preferably of from 1 to 10% by weight, still more preferably of from 2 to 5% by weight.

The flame retardants which can be selected from those derived from phosphorus containing, sulfur containing or halogenated products. For example, triphenyl phosphate, tributyl phosphate, tricresyl phosphate, tributoxyphenyl phosphate, melamine pyrophosphate, ammonium polyphosphate, ethylene diamine, ammonium polyphosphate, guanidium phosphate, tetrabromophthalic anhydride, halogenated paraffins, diphenyl oxide with different bromination degrees, ammonium sulfate, ammoinium sulfamate, and so forth, are suitable fro the intended purpose. Ammonium sulfate, ammonium sulfamate, ammonium polyphosphate, guanidinium phosphate and melamine pyrophosphate are particularly advantageous.

Other useable flame retardants are aluminium bydroxide, antimony oxide, ammonium perborate, ammonium octamolybdate, and so forth.

For particular applications, the presence may be required in the foamed particles of repellent substances to rodents, which can be added to the mixture used for preparing the foamed particles, or can be added to the foamed particles as active principle containing microcapsules, or as a masterbatch, in particular in combination with the nucleation agents and/or flame retardants.

For that purpose, such substances as N,N-diethyl-m-toluamide, diethylphenyl acetamide, 2-decanal, ammonium chloride, potassium chlorate, terpenoids, cycloheximide, diguanidinoazaheptadecane, and so on, can be used. Terpenoids, and, in particular, menthol and limonene are preferred.

When used, these repellents are present in amounts comprised within the range of from 0.1 to 5% by weight, preferably comprised within the range of from 1 to 3 % by weight.

The foamed particles which constitute the foamed article of the invention can be prepared by means of a process of extrusion of the starch based composition, carried out by means of a single screw or twin screw extruder.

Such an extrusion process, carried out in the presence of a further water amount comprised within the range of from 5 to 20 % by weight, causes the starch contained in the composition to get destructured. However, water content should be controlled by means of a venting system, so as to have a total water content at the nozzle, comprised within the range of from 5 to 20 % by weight.

As an alternative, granules can be used of a thermoplastic starch previously destructured according to such methodologies as know, e.g., from publishes International Patent Application WO 92/02363 and WO 92/14728, the contents of which are incorporated by reference to the instant application.

The above said extrusion processes are carried out at temperatures generally comprised within the range of from 150 to 250 °C, with residence times generally of from 20 seconds to 15 minutes. The noodle cutting (pelletizing) downstream of the extruder head is carried out at a high speed, so that the molten material is cut when it is not yet solidified and therefore the relulstingparticles (pellets) turn into substantially spherical particles. The shear values at extruder head generally are higher than 1000 s⁻¹, preferably higher than 3000 s⁻¹.

Another route to prepare the foamed particles consists of a treatment of compressing/depressurizing non-foamed particles having a size comprise within the range of from 20 µm to 1 mm, as diameter. Said non-foamed particles can be obtained, e.g., by extrusion through multi-bore dies and subsequent head cutting, of by grinding larger-size granules. These non-foamed particles are submittes to a pressure comprised within the range of from 2 to 100 bars, in the presence of moisture in equilibrium with water contained in the material, at temperature comprised within the range of from 40 to 200 °C, followed by a fast depressurizing.

Still another method for preparing the foamed particles consists in submitting the above type of non-foamed particles to a heating treatment by microwaves.

The foamed articles of biodegradable plastic material according to the present invention can be prepared by means of a process of agglomeration of foamed particles of the above said material.

Therefore, a further object of the present invention is a process fro producing foamed articles made of biodegradable plastic material, which process comprises the steps of:
- submitting foamed particles having a density comprised within the range of from 0.1 to 0.005 g/cm³ and a size comprised within the range of from 0.5 to 10 mm of diameter with said particles being constituted by a material comprising:
   - from 50 to 95 %, by weight, preferably from 60 to 95 % by weight, of thermoplastics starch,
   - from 0.5 to 45 %, by weight, preferably from 2 to 35 % by weight, of at least one thermoplastic polymer, and
- from 2 to 20 %, by weight, preferably from 5 to 17 % by weight, of water, to a heat treatment and/or to a treatment with at least one coating agent in order to modify the surface of said particles, rendering them capable of stably interacting with each other when they are caused to come into mutual intimate contact; and
- subsequently, keeping said foamed particles into intimate contact with one another, during a long enough time to cause them to agglomerate.

The good resilience properties of the foamed particles enable them to withstand any collapsing phenomena when they are brought into an intimate contact stats.

Coating agents useable in the process according to the present invention are, e.g.:
i. liquid-state water, possibly with the addition of salts and/or additives, or water in the gas state;
ii. aqueous solutions, suspension and/or emulsion of either natural or synthetic, polymeric or monomeric substances, or said substances in the molten state;
iii. solvents with high enough "wetting power";
iv. solutions, suspensions and/or emulsions of either natural or synthetic, polymeric or monomeric substances, in said solvents;
v. polymers with melting point of <130 °C, preferably of <90 °C.

Examples of coating agents which can be used i aqueous solution, suspension or emulsion in the process of the present invention are:
- poly(vinyl acetate);
- poly(vinyl butyrate);
- copolymers of vinyl acetate or vinyl butyrate with one or more monomer(s) selected from vinyl esters, acrylates, methacrylates, allyl derivatives, pyridinium salts, acrylonitrile, acrylamide, vinyl pyrrolidone, vinyl pyridine, vinyl imidazoles, which can possibly be either partially or totally hydrolysed;
- poly(vinyl acetate) or poly(vinyl butyrate) grafted with aliphatic polyesters, such as polycaprolactone, or lactic acid polymers;
- high- or low-hydrolysis-degree poly(vinyl alcohol), possibly pre-treated with plasticizes and/or admixed with gelation agents, such as, e.g., boric acid, borates, titanates;
- poly(vinyl alcohol) modified by acetalization, etherification, esterification;
- block copolymers of poly(vinyl alcohol) with poly(vinyl acetate or styrene);
- fatty acid capped poly(vinyl alcohol);
- poly(vinyl alcohol) grafted with polyoxyethylene and/or polyoxypropylene;
- native starch from any origins, possibly hydroxyalkylated, cationic, oxidized, crosslinked, hydrolysed starch, or modified starch with ester, ether and/or phosphate groups;
- casein and caseinates;
- alkyl cellulose, hydroxyalkyl cellulose and cellulose esters, such as cellulose acetate and carboxymethyl cellulose, possibly plasticized and/or modified with aliphatic esters, as caprolactone;
- natural rubber latex;
- natural gums (vegetable hydrocolloids), such as gum arabic, possibly grafted with acrylamide, acrylonitrile, styrene or acrylic esters;
- alginic acid, alginates, abietinic acid, rosin resin, agar-agar, guar gum, carrageenin, xanthan gum, pullulan, chitosans, shellac, animal gelatins, proteins, emulsifiers, dispersants, fillers;
- ammonium or sodium salts of ionomeric polymers derived from poly(acrylic acid), ethylene/acrylic acid copolymers, acrylamide/acrylic acid copolymers, poly(styrene sulfonic acid);
- homo- and co-polymers of prevailingly aliphatic character, in particular polyurethanes, polyamides, polyesters, such as poly(caprolactone), poly(lactic acid), poly(hydroxybutyrate-valerate), poly(butanediol succinate), and their copolymers with partially substituted polyfuncional alcohols.

Among the above listed substances, poly(vinyl acetate) is particularly suitable for use in coating agents in the process according to the present invention.

The process for preparing the foamed articles of the present invention preferably comprises a step of:
- thermal and/or aeration treatment prior to, simultaneously with, or subsequently to, the step of particles bringing into intimate contacts, in order to facilitate the evaporation of the liquid substances and/or the polymerization of the monomeric substances contained in the coating agent.

The resulting foamed articles can be suitable submitted to a further post-drying treatment.

This post-drying treatment, which makes it possible any possible residual water or solvents to be removed, can be carried out in a dry, humid or conditioned environment. In the event that the coating agent comprises a monomeric substance capable of polymeizing, said post-treatment can furthermore be used in order to bring the polymerization reaction and/or particles agglomeration to its completion. Said post-drying treatment step can furthermore secure a stabilization of the shape of the obtained articles of manufacture.

In the event that the coating agent is used in an emulsion form, this can contain emulsifier agents and/or thickeners in amounts comprised within the range of from 0.05 to 3 % by weight, preferably comprised within the range of from 0.1 to 2 % by weight, still more preferably of from 0.2 to 1 % by weight.

Useable emulsifier agents are, e.g., the surfactants with a hydrophile/lipophile balance index (HLB) comprised within the range of from 3 to 25, preferably of from 6 to 20. Particularly effective surfactants are those which derive from polyoxyethylene or polyoxypropylene, either by directly esterifying them with fatty acids, such as, e.g., polyoxyethylenes (4-20 mol) esterified with lauric, palmitic or stearic acid, or by esterifying polyoxyethylated sugars with fatty acids, such as, e.g., oxyethylated (4-20 mol) sorbitols esterified with 1-6 mol of fatty acid. Useable surfactants furthermore are oxyethylates nonylphenols, lanolin ethers and esters, tri-ethanolamine oleates, polyglycerol esters of fatty acids, polyoxyethylene ethers with fatty alcohols, such as, e.g., stearly alcohol, cetyl alcohol or cholesterol, PEG-tallow amine, PEG-castor oil.

Thickening agents which can be used are, e.g., sodium carboxymethylcellulose, methyl cellulose, natural rubbers, clays, and so forth.

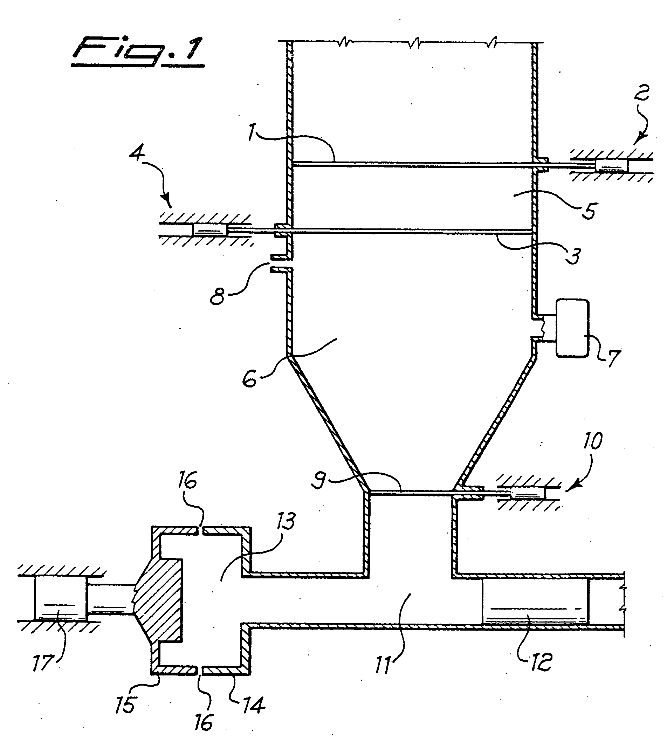

According to a preferred embodiment, the process according to the present invention can be suitably carried out by using a type of apparatus like the one shown in Figure 1.

Referring to the drawing of Figure 1, the reference numerals (1), (3) and (9) indicate slidable separation walls which are pneumatically driven by means of the opening/closure system indicated with (2), (4) and (10), respectively.

With the separation wall (1) open, the foamed particles are charged to the metering chamber (5); the wall (1) is then closed and, by opening the separation wall 83), the particles are caused to fall into the atomization chamber (6); the separation wall (3) is then closes and the atomizer unit 7, containing the coating agent, is started-up and is made operate during a long enough time period in order to cause the chamber (6) to become saturated with the coating agent; now, the atomizer (7) is stopped and, by opening the separation wall (9), the particles are caused to fall into the duct (11); the female and male portions (14) and (15), respectively, of the mould, are kept in such a position that the width of the air gap (16) between them is smaller than the diameter of the pellets; the separation wall (9) is them close and, by means of the piston (12), the particles are fed to the mould inside which they are submitted to pressure; the mould if finally opened by means of the piston (17), in order to recover the manufactured articles obtained.

According to another preferred embodiment, the process of the present invention can be suitably carried out by submitting the foamed particles to the treatment with the coating agent, directly along the feed channel to the forming chamber in an apparatus like those used to sinter foamed polystyrene particles (mould with venting openings).

Finally, the coating agent can be suitably fed directly through the bores of the mould, after charging the foamed particles to the latter.

The following Examples are supplied fro merely illustrative purposes and are not limitative of the invention.

### Characterization

### Resilience Test

This test is used in order to measure the material capability of recovering its initial shape after being submitted to the action of a force which caused it to get deformed.

A cylindrical container of 125 mm of diameter and 150 mm of height is filled with foamed particles, which are squeezed by the flat sensor of a force gauge, moving forwards with the speed of 25 mm/minute. The sensor presses the particles by 33 % of cylinder height, then returns back to its starting position. One minute later, the sensor performs a second particle compression treatment, according to the same modalities as of the first one.

The resilience value, reported as a % value, is the ratio of the applied force for the first compression stroke, divided by the applied force for the second compression stroke, times 100.

| Density | |
|---|---|
| Dₐₚₚ (Kg/cm³) | Bulk density of foamed particles, calculated from the weight of a 5-litre volume of particles; |
| d_{bulk} (Kg/cm³) | Pycnometric density of the individual foamed particles; |
| dₑₓₚ (Kg/m³) | Pycnometric density of the foamed article of manufacture. |

### EXAMPLE 1

A mixture was prepared with the following composition:
- 75 %, by weight, of potato starch;
- 10 %, by weight, of poly(vinyl alcohol) with the hydrolysis degree of 86%; and
- 15 %, by weight, of water.

This composition was fed to a twin-screw extruded APV 2030 with diameter (d) = 30 mm and length:diameter ratio [(L)/(d)] = 30. The operating conditions were as follows:
- screw revolution speed (rpm) = 150:
- temperature profile: 69 °C/100 °C/180 °C/170 °C/155 °C;
- extruder throughput: 10 Kg/h.

The event was so adjusted as to keep a total water content of about 14 %.

The so obtained pellets, together with 0.5 % of talc with average particles diameter of about 1.5 µm, were fed to a single-screw extruder ex OMC, with diameter (d) = 40 mm and length:diameter ratio [(L)/(d)] = 28, equipped with an extruder head with 4 nozzles with diameter (d) = 0.8 mm and length:diameter ratio [(L)/)d)]<1.

The operating conditions were as follows:
- screw revolution speed (rpm) =40;
- temperature profile: 80°C/120°C/190°C/190°C/200°C;
- extruder throughput: 52 Kg/h.
- head cutting blade revolution speed: 4,000 rpm.

Pellets of foamed material were obtained, the characteristics of which are reported in Table .1.

### EXAMPLE 2

The operating procedure was the same as of Example 1, but a mixture with the following composition was used:
- 64 %, by weight, of potato starch;
- 25 %, by weight, of EVOH containing 44 %o of ethylene units by mol, with hydrolysis degree of 99.8 %, and Mw = 70,000;
- 10 %, by weight, of water; and
- 1 %, by weight, of glycerol monooleate.

The water content in the pellet is of approximately 10 %. The characteristics of the foamed pellet are reported in Table 1.

### EXAMPLE 3

The operating procedure was the same as of Example 1, but a mixture with the following composition was used:
- 78 %, by weight, of potato starch;
- 7 %, by weight, of EVOH containing 44 % of ethylene units by mol, hydrolysis degree of 99.8 %, and mw = 70,000;
- 8 %, by weight, of poly(vinyl alcohol with hydrolysis degree of 86 %;
- 6 %, by weight, of water; and
- 1 %, by weight, of glycerol monooleate.

The water content in the pellet is of approximately 12 %. The characteristics of the foamed pellet are reported in Table 1.

### EXAMPLE 4

The operating procedure was the same as of example 1, but a mixture with the following composition was used:
- 69 %, by weight, of potato starch;
- 10 %, by weight, of polycaprolactone UC PCL 787;
- 5 %, by weight, of Pellethane (2102-85AE9, a caprolactone-urethane block copolymer;
- 15 %, by weight, of water; and
- 1 %, by weight, of glycerol monooleate.

The water content in the pellet is of approximately 10 %. The characteristics of the foamed pellet are reported in Table 1.

### EXAMPLE 5

The operating procedure was the same as of Example 1, but a mixture with the following composition was used:
- 75 %, by weight, of potato starch;
- 10 %, by weight, of a Dow Chemical's ethylene-acrylic acid copolymer containing 20 % of acrylic units by mol; and
- 15 %, by weight, of water.

The water content in the pellet is of approximately 10 %. the characteristics of the foamed pellet are reported in Table 1.

### EXAMPLE 6

The operating procedure was the same as of Example 1, but a mixture with the following composition was used:
- 75 %, by weight, of potato starch;
- 10 %, by weight, of cellulose acetate with substitution degree 2.5, plasticized with 20% caprolactone; and
- 15 %, by weight, of water.

The water content in the pellet is of approximately 12 %. The characteristics of the foamed pellet are reported in Table 1.

### EXAMPLE 7

The metering chamber 5 of the apparatus illustrated in Figure 1, of 2 litres of volume, was filled with foamed particles obtained from Example 3.

Then, by following the above specified procedure, the pellets were treated with a Vinavil NPC emulsion (from Enichem Synthesis) containing 50 % poly(vinyl acetate), atomized by means of the atomizer unit 7.

The resulting manufactured articles was submitted to a post-drying treatment inside a chamber conditioned at 23 °C and relative humidity (RH) = 30 % during 15 hours.

The characteristics of the foamed product are reported in Table 2.

### EXAMPLE 8

The operating procedure was the same as used in Example 7, but this time Vinavil NPC emulsion (from Enichem Synthesis) was used diluited 1:10 with water (water:Vinavil).

The characteristics of the foamed product are reported in Table 2.

### EXAMPLE 9

The operating procedure was the same as used in Example 7, but this time Vinavil NPC emulsion (from Enichem Synthesys) was used diluted 1:5 with water (water:Vinavil).

The characteristics of the foamed product are reported in Table 2.

### EXAMPLE 10

The operating procedure was the same as used in Example 7, but this time Vinavil NPC emulsion (from Enichem Synthesys) was used diluted 1:2 with water (water:Vinavil).

The characteristics of the foamed product are reported in Table 2.

### EXAMPLE 11

The operating procedure was the same as used in Example 10, but with the difference that the foamed pellets used are those obtained from Example 2.

The characteristics of the foamed product are reported in Table 2.

### EXAMPLE 12

The operating procedure was the same as used in Example 10, but with the difference that the foamed pellets used are those obtained from Example 1.

The characteristics of the foamed product are reported in Table 2.

### EXAMPLE 13

The operating procedure was the same as used in Example 10, but with the difference that the post-drying treatment was carried out inside a chamber conditioned at 23 °C and relative humidity (RH) = 55 % during 15 hours.

The characteristics of the foamed product are reported in Table 2.

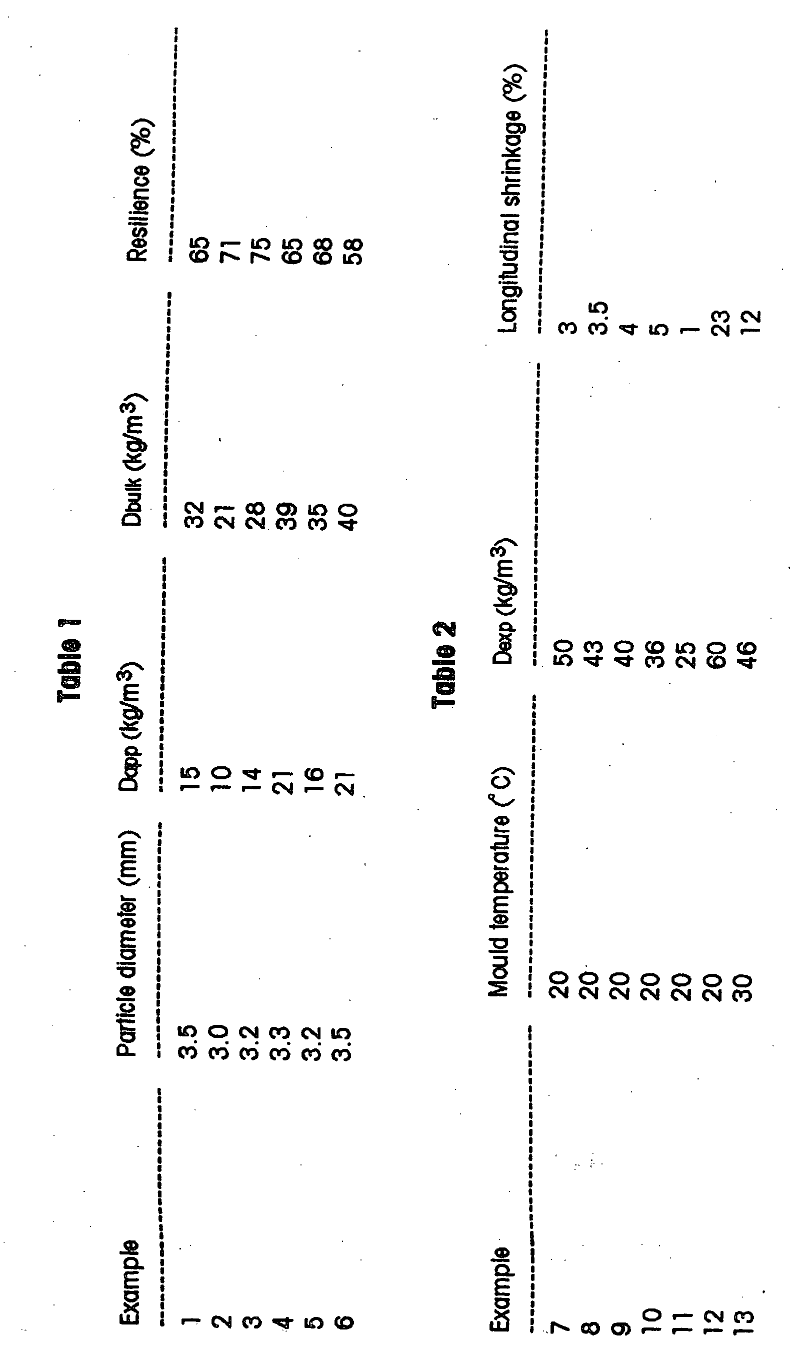

## Claims

1. Foamed articles made of agglomerated foamed particles submitted to heat treatment, in a mould, rendering them capable to stably interacting with each other when they are caused to come into mutual intimate contact formed of a material comprising:
- from 50 to 95% by weight of thermoplastic starch;
- from 0.5 to 45% by weight of a thermoplastic polymer;
- from 2 to 20% by weight of water
**characterized in that** the foamed particles are prepared through a route which consists of compressing/depressurising non foamed particles or through a heating treatment by microwave.

2. Foamed articles according to claim 1 where said non foamed particles are obtained by extrusion and then submitted to a pressure comprised within 2 and 100 bars in the presence of moisture in equilibrium with water contained in the material at temperature comprised within the range of from 40 and 200°C, followed by a fast depressurizing.

3. Foamed articles according to claim 1, wherein the thermoplastic polymer is selected from the group consisting of
i. Polymer from natural origin, either modified or non-modifled, in particular cellulose derivatives, as cellulose acetate, cellulose butyrate with a substitution degree comprised within the range of from 1 to 2.5, possibly plasticized, alkyl celluloses, hydroxy alkyl celluloses, carboxy alkyl cellulose, in particular methyl cellulose, and, furthermore, chitosan, pullulan or casein and caseinates;
ii. Biodegradable polymers of synthetic origin, or obtained by fermentation, in particular polyesters, as homo-and copolymers of aliphatic C2-C24 hydroxy acids, or the corresponding lactones or lactides thereof, and furthermore polyesters derived from difunctional acids and aliphatic diols, such as, e.g.:
poly(epsilon-caprolactone), or its graft or block copolymers, the reaction products of caprolactone oligomers or polymers with aromatic or aliphatic isocynates, lactic acid of lactide polymers, glycolic acid or polyglicolide polymers, lactic acid and glycolic acid copolymers, polyhydroxybutyrate or polyhydroxybutyrate-valerate, polyalkylene succinates and, in particular, polyethylene- or polybutylene succinate, polyethylene- or polybutylene adipate, polyethylene-or polybutylene sebacate, polyethylene- or polybutylene azelate, polyethylene- or propybutylene brassilate and copolymers thereof, possibly copolymerized with aliphatic or aromatic isocynates, possibly with their molecular weight being increased by means of chain extenders;
iii. Polymers capable of forming "V" type complexes with amylose, or polymers containing hydrophilic groups intercalated with hydrophobic sequences, such as:
ethylene-vinyl alcohol copolymers containing up to 50% by weight, preferably 10-44% by weight, of ethylene units, oxidised ethylene-vinyl alcohol copolymers, or ethylene-vinyl alcohol copolymers terminated with fatty acids, or grafted with polycaprolactone, or modified with acrylic of methacryloc monomers and/or pyridinium, ethylene-vinyl acetate copolymers, which may also be partially hydrolysed, ethylene-acrylic esters copolymers, ethylene-acrylic esters-maleic anhydride or ethylene-vinyl acetate-glycidyl methacrylate terpolymers, ethylene copolymers with unsaturated acids, such as acrylic acid, methacrylic acid, crotonic acid, itaconic acid, maleic anhydride, and so forth, in particular ethylene-acrylic acid copolymers containing 5-50 %, by mol, and preferably 10-30%, by mol, of units derived from acrylic acid, ethylene termopolymer with vinyl acetate, which may be either totally or partially hydrolysed, with acrylic or methacrylic or crotonic or itaconic acid, aliphatic 6-6, 6-9 or 12 polyamides, aliphatic polyurethanes, random or block polyuretane-polyamide, polyurethane-polyester, polyurethane-polyether, polyamide-polyester, polyamide-polyether, polyester-polyether copolymers;
iv. Polymers capable of forming hydrogen bonds with starch, in particular poly(vinyl alcohol) in various hydrolysis degrees, possibly modified with acrylates or methacrylates, poly(vinyl alcohol) previously plasticized or modified in order to reduce the melting point thereof, possibly containing gelling agents, as boric acid, borates or phosphates, vinyl acetate copolymers (in various hydrolysis degrees) with vinylpyrrolidone or styrene, polyethyloxazolines, polyvinylpyridine.

4. Foamed articles according to claim 3, wherein the aliphatic polyester is selected from polycaprolactone, polybutylene-succinate, polyethylene-sebacate, polybutylene-sebacate, polyethylene-azelate or polybutylene-azelate, polylactic acid, polyethylenbrassilate, polyhydroxy-buthyrate and and their copolymers.

5. Foamed articles according to any claims from 1 to 4, wherein the material which constitutes the foamed particles comprises from 0.005 to 5% by weight of a nucleating agent.

6. Foamed articles according to any claims from 1 to 5, wherein the foamed particles are prepared by means of a process of extrusion of the starch based composition carried out by means of a single screw or twin screw extruder.

7. A process for preparing foamed articles made of a biodegradable plastic material through compressing/depressurising non foamed particles.

8. A process for preparing foamed articles made of a biodegradable plastic material through through a heating treatment by microwave.

9. Foamed particles having the characteristics as set forth in claim 1, obtainable by microwaves heat-treatment of non-foamed particles.

10. Foamed particles having the characteristics as set forth in claim 1, obtainable by heat-treatment of non-foamed particles under a compressing / depressurising process.
